# FASCICULE DE BREVET EUROPEEN

(11) **EP 3 393 727 B1**
(45) Date de publication et mention de la délivrance du brevet: **05.02.2020**
(21) Numéro de dépôt: 16819115.3
(22) Date de dépôt: 23.12.2016
(51) Int. Cl.: B25J 9/00

(54) **MODULE D'EPAULE POUR UNE STRUCTURE D'EXOSQUELETTE**
SCHULTERTEIL FÜR EINE EXOSKELETTSTRUKTUR
SHOULDER PORTION FOR AN EXOSKELETON STRUCTURE

(30) Priorité: 24.12.2015 FR 1563349
(43) Date de publication de la demande: 31.10.2018
(73) Titulaire: Safran Electronics & Defense, 92100 Boulogne-Billancourt (FR); B-Temia Inc., Québec, Québec G1P 4R1 (CA)
(72) Inventeur: BAPTISTA, Jonathan, 92100 Boulogne-Billancourt (FR); THIEFFRY, Roland, 92100 Boulogne-Billancourt (FR); GRENIER, Jordane, 92100 Boulogne-Billancourt (FR); VAURE, Alexandre, 92100 Boulogne-Billancourt (FR)
(74) Mandataire: Regimbeau
(86) Numéro de dépôt international: PCT/EP2016/082598
(87) Numéro de publication internationale: WO 2017/109197

(56) Documents cités:
- WO-A1-2012/042471
- WO-A2-2015/099858
- KR-A- 20140 089 827
- US-A- 3 277 594
- US-B1- 6 301 526
- US-B1- 7 066 896

## Description

### DOMAINE DE L'INVENTION

L'invention concerne un module d'épaule pour une structure d'exosquelette pour l'assistance à l'effort d'un utilisateur.

### ETAT DE LA TECHNIQUE

Les exosquelettes d'assistance à l'effort sont des structures mécaniques qui doublent la structure du squelette humain et qui permettent d'améliorer les capacités physiques du corps humain.

Il existe différents exosquelettes d'assistance à l'effort dont la forme et la structure dépendent des tâches à accomplir par l'utilisateur.

De manière générale, chaque exosquelette est conçu pour assister l'utilisateur pour l'accomplissement d'une tâche bien spécifique.

Il existe en particulier des structures d'exosquelette destinées à être fixées sur le haut du corps d'un utilisateur pour assister l'utilisateur dans ses mouvements de bras, notamment pour le levage et la manipulation de charges. Voir par exemple le document US 6 301 526 B1.

Cependant, ces structures ne permettent généralement pas de s'adapter à l'ensemble des mouvements du complexe articulaire de l'épaule. Par exemple, ces structures peuvent permettre un mouvement de flexion et d'extension de l'épaule, mais ne pas permettre un mouvement d'abduction et d'adduction de l'épaule.

Or le complexe articulaire de l'épaule est une double articulation complexe possédant six degrés de liberté incluant trois degrés de liberté procurés par l'épaule elle-même, et trois degrés de liberté procurés par la ceinture scapulaire supportant l'épaule.

D'autres structures ont également été proposées qui permettent de mieux reproduire les mouvements de l'épaule. Toutefois, ces structures présentent généralement un encombrement important ou ne coïncident pas avec la logique de mobilisation de l'épaule, ce qui entrave la mobilité de l'utilisateur.

### RESUME DE L'INVENTION

Un but de l'invention est de proposer un module d'épaule pour une structure d'exosquelette qui procure une plus grande liberté de mouvement du complexe articulaire de l'épaule de l'utilisateur tout en étant compact et léger par rapport aux technologies existantes.

Ce but est atteint dans le cadre de la présente invention grâce à un module d'épaule pour une structure d'exosquelette, le module d'épaule étant destiné à relier un module de coude fixé sur un bras d'un utilisateur à un module de dos fixé sur le dos de l'utilisateur, le module d'épaule comprenant :
- une pluralité de pièces de liaison, et
- un premier pivot reliant deux des pièces de liaison en autorisant une rotation de l'une des pièces de liaison par rapport à l'autre pièce de liaison selon un premier axe de rotation, lors d'une rotation du module de coude par rapport au module de dos correspondant à un mouvement d'abduction ou d'adduction de l'épaule de l'utilisateur,
dans lequel les pièces de liaison incluent une première pièce de liaison comprenant deux pièces montées coulissantes l'une par rapport à l'autre par le biais d'une première glissière, le coulissement des pièces l'une par rapport à l'autre autorisant un raccourcissement de la pièce de liaison lors de la rotation du module de coude par rapport au module de dos causée par un mouvement d'abduction de l'épaule de l'utilisateur et autorisant un allongement de la première pièce de liaison lors de la rotation du module de coude par rapport au module de dos causée par un mouvement d'adduction de l'épaule de l'utilisateur, et dans lequel la première glissière comprend un élément élastique de rappel tendant à s'opposer à un écartement des pièces l'une par rapport à l'autre conduisant à un allongement de la première pièce de liaison.

Dans un tel module, le premier axe de rotation ne coïncide pas nécessairement avec l'axe de rotation réel de l'épaule. En effet, l'allongement et le raccourcissement de la pièce de liaison permettent de faire varier la longueur de la pièce de liaison afin de compenser le décalage des axes de rotation.

Par ailleurs, l'élément élastique de rappel permet d'assister l'utilisateur dans son mouvement d'abduction de l'épaule en compensant le poids du module de coude.

De cette manière, il est possible de concevoir un module d'épaule dans lequel les pièces de liaison sont positionnées en étant proches du corps de l'utilisateur, ce qui permet de concevoir un module particulièrement compact.

Le module peut en outre présenter les caractéristiques suivantes :
- le module comprend en outre un deuxième pivot reliant deux pièces de liaison en autorisant une rotation de l'une des pièces de liaison par rapport à l'autre pièce de liaison selon un deuxième axe de rotation, lors d'un mouvement de rotation du module de coude par rapport au module de dos correspondant à une rotation interne ou externe de l'épaule de l'utilisateur,
- le premier axe de rotation coupe le deuxième axe de rotation,
- le module comprend en outre un troisième pivot reliant deux pièces de liaison en autorisant une rotation de l'une des pièces de liaison par rapport à l'autre pièce de liaison selon un troisième axe de rotation, lors d'une rotation du module de l'épaule coude par rapport au module de dos correspondant à un mouvement de flexion ou d'extension de l'épaule de l'utilisateur, et dans lequel le troisième axe de rotation coupe le deuxième axe de rotation,
- le troisième axe de rotation coupe le deuxième axe de rotation,
- les pièces de liaison incluent une deuxième pièce de liaison propre à raccorder le module d'épaule à une articulation de coude du module de coude, la deuxième pièce de liaison comprenant deux pièces montées coulissantes l'une par rapport à l'autre par le biais d'une deuxième glissière, le coulissement des pièces l'une par rapport à l'autre autorisant un raccourcissement ou un allongement de la deuxième pièce de liaison lors d'une rotation du module de coude par rapport au module de dos correspondant à un mouvement de flexion ou d'extension du coude de l'utilisateur,
- la deuxième glissière comprend un élément élastique de rappel tendant à s'opposer à un écartement des pièces l'une par rapport à l'autre conduisant à un allongement de la deuxième pièce de liaison,
- le module comprend en outre un mécanisme à quatre barres reliant le module de dos au premier pivot, le mécanisme à quatre barres comprenant quatre barres, et quatre articulations reliant les barres entre elles en formant un parallélogramme déformable,
- le mécanisme à quatre barres comprend un organe élastique s'étendant selon une diagonale du parallélogramme et reliant deux articulations opposées entre elles,
- le module comprend un quatrième pivot reliant l'une des barres du mécanisme à quatre barres à une pièce du module de dos et un cinquième pivot reliant une barre parallèle du mécanisme à quatre barres à l'une des pièces de liaison.

L'invention concerne en outre une structure d'exosquelette comprenant :
- un module de dos propre à être fixé sur le dos d'un utilisateur,
- un module de coude propre à être fixé sur le bras d'un utilisateur, et
- un module d'épaule tel que défini précédemment.

### PRESENTATION DES DESSINS

D'autres caractéristiques et avantages ressortiront encore de la description qui suit, laquelle est purement illustrative et non limitative et doit être lue en regard des figures annexées, parmi lesquelles :
- la figure 1 représente de manière schématique, en vue de face, un utilisateur équipé d'une structure d'exosquelette conforme à un mode de réalisation possible de l'invention,
- les figures 2 et 3 représentent de manière schématique, en vue de dos et en vue de profil, l'utilisateur équipé de la structure d'exosquelette, conformément à une première configuration possible de l'invention,
- les figures 4 et 5 représentent de manière schématique, en vue de dos et en vue de profil, l'utilisateur équipé de la structure d'exosquelette, conformément à une deuxième configuration possible de l'invention,
- les figures 6 et 7 représentent de manière schématique, en vue de dos et en vue de profil, l'utilisateur équipé de la structure d'exosquelette, conformément à une troisième configuration possible de l'invention,
- les figures 8A et 8B représentent de manière schématique une articulation de hanche reliant un module de hanche au module de base,
- la figure 9 représente de manière schématique un dispositif d'attache pour attacher le module de hanche au module de base,
- les figures 10A et 10B représentent de manière schématique le dispositif d'attache en configuration déverrouillée et en configuration verrouillée respectivement,
- la figure 11 représente de manière schématique des modules inférieurs de la structure d'exosquelette,
- les figures 12A à 12E représentent de manière schématique, une chaussure équipée d'un module de pied, au cours de différentes phases de marche de l'utilisateur,
- la figure 13 représente de manière schématique, en vue agrandie, des modules supérieurs de la structure d'exosquelette,
- la figure 14 représente de manière schématique un segment de colonne vertébrale faisant partie du module de dos,
- la figure 15 représente de manière schématique un élément de vertèbre du segment de colonne vertébrale,
- les figures 16 à 18 représentent de manière schématique un module d'épaule,
- la figure 19 représente de manière schématique un dispositif d'attache pour attacher le module d'épaule au module de coude,
- les figures 20 et 21 représentent de manière schématique un module de support de sac à dos,
- la figure 22 représente de manière schématique un dispositif d'attache pour attacher le module de support de sac à dos à chaque module de hanche.

### DESCRIPTION DETAILLEE D'UN MODE DE REALISATION

### Structure modulaire

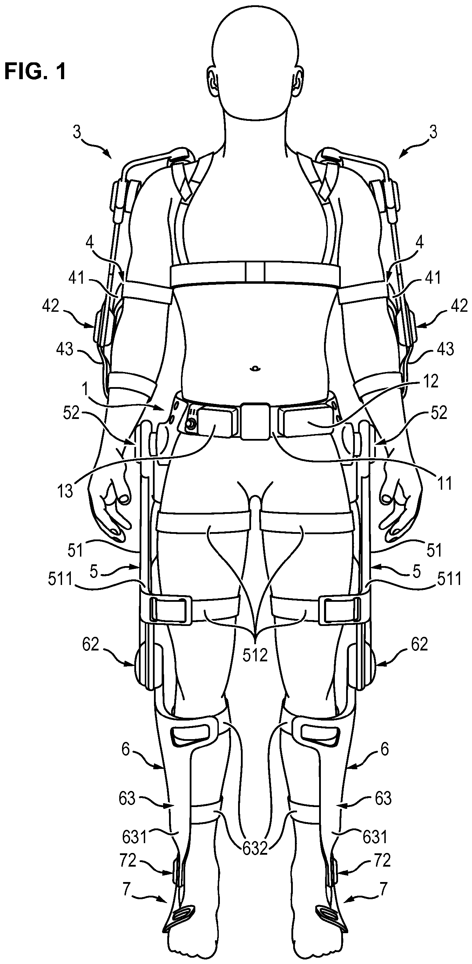

Sur les figures 1 à 7, la structure d'exosquelette représentée comprend un module de base 1, un module de dos 2, deux modules d'épaule 3, deux modules de coude 4, deux modules de hanche 5, deux modules de genou 6, deux modules de pied 7 et un module de support de sac à dos 14.

La structure d'exosquelette illustrée sur ces figures peut être utilisée selon différentes configurations, afin d'obtenir différents exosquelettes adaptés pour différentes utilisations.

Dans une première configuration illustrée sur les figures 1 à 3, l'exosquelette est formé par l'assemblage du module de base 1, du module de dos 2, des deux modules d'épaule 3, des deux modules de coude 4, des deux modules de hanche 5, des deux modules de genou 6 et des deux modules de pied 7.

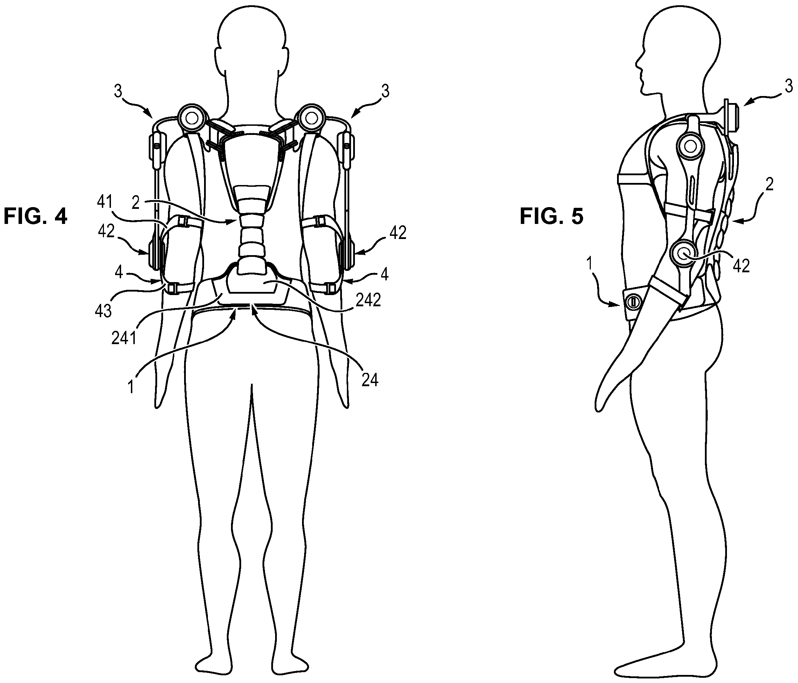

Dans une deuxième configuration illustrée sur les figures 4 et 5, l'exosquelette est formé par l'assemblage du module de base 1, du module de dos 2, des deux modules d'épaule 3 et des deux modules de coude 4 uniquement.

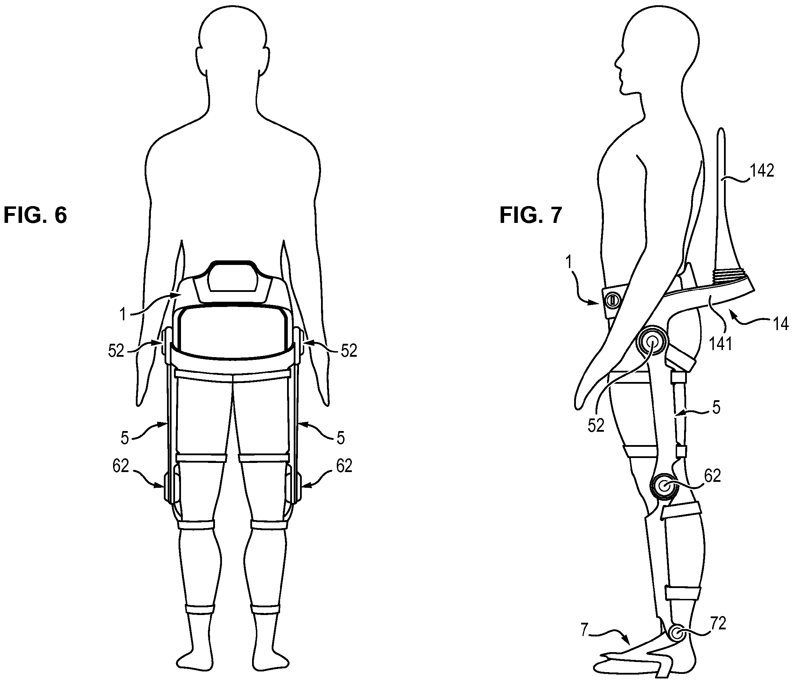

Dans une troisième configuration illustrée sur les figures 6 et 7, l'exosquelette est formé par l'assemblage du module de base 1, des deux modules de hanche 5, des deux modules de genou 6, des deux modules de pied 7, et du module de support de sac à dos 14 uniquement.

Les trois exemples de configurations illustrés sur ces figures sont obtenus à partir de trois assemblages différents de la structure modulaire d'exosquelette. Cependant, d'autres configurations seraient bien entendu envisageables. Dans ces différentes configurations, l'exosquelette est formé à partir d'un ou de plusieurs modules assemblés entre eux.

Comme illustré sur les figures 1 à 3, le module de base 1 comprend une ceinture lombaire 11 propre à entourer le bas du tronc de l'utilisateur. La ceinture lombaire 11 est disposée autour de la taille de l'utilisateur, en appui sur les hanches de l'utilisateur. Le module de base 1 comprend également une première batterie 12 permettant d'alimenter les différents actionneurs de la structure en énergie électrique, et une unité de commande 13 programmée pour commander les différents actionneurs. La première batterie 12 et l'unité de commande 13 sont fixées à la ceinture lombaire 11.

Le module de dos 2 est adapté pour être fixé sur le haut du corps de l'utilisateur, au-dessus du module de base 1, le long du dos de l'utilisateur.

Les modules de coude 4 sont adaptés pour être fixés sur les bras de l'utilisateur, respectivement au bras droit et au bras gauche.

Chaque module d'épaule 5 est adapté pour relier le module de dos 2 à un module de coude 4 respectif.

Le module de dos 2, les modules d'épaule 3 et les modules de coude 4 forment un ensemble de modules supérieurs qui ont pour fonction d'assister l'utilisateur dans les efforts qu'il produit avec le haut de son corps, par exemple lorsqu'il effectue des tâches répétitives avec le haut de son corps.

Les modules de hanche 5 sont adaptés pour être fixés sur les cuisses de l'utilisateur, respectivement à la cuisse droite et à la cuisse gauche de l'utilisateur.

Les modules de genou 6 sont adaptés pour être fixés sur les mollets de l'utilisateur, respectivement au mollet de la jambe droite et au mollet de la jambe gauche de l'utilisateur.

Les modules de pied 7 sont adaptés pour être fixés sur les pieds de l'utilisateur, respectivement au pied droit et au pied gauche.

Les modules de hanche 5, les modules de genou 6 et les modules de pied 7 forment un ensemble de modules inférieurs qui ont pour fonction d'assister l'utilisateur dans les efforts qu'il produit avec le bas de son corps, notamment lors de la marche ou lorsqu'il porte ou déplace des charges.

On notera que les modules de hanche 5 sont symétriques l'un de l'autre. Les modules de hanche 5 comprennent donc des parties identiques ou similaires.

De même, les modules de genou 6 sont symétriques l'un de l'autre, et comprennent des parties identiques ou similaires.

Il en est de même des modules de pieds 7, des modules d'épaule 3 et des modules de coude 4.

### Module de hanche

Comme illustré sur les figures 1 à 3, chaque module de hanche 5 comprend une partie fémorale 51 propre à être fixée sur la cuisse de l'utilisateur et une articulation de hanche 52.

La partie fémorale 51 comprend un segment fémoral 511 prévu pour s'étendre le long de la cuisse de l'utilisateur et des sangles de fixation 512 propres à entourer la cuisse de l'utilisateur pour fixer le segment fémoral 511 à la cuisse.

Chaque module de hanche 5 est relié au module de base 1 par le biais d'une articulation de hanche 52 respective. Plus précisément, l'articulation de hanche 52 permet de relier la partie fémorale 51 du module de hanche 5 à la ceinture 11 du module de base 1.

### Articulation de hanche

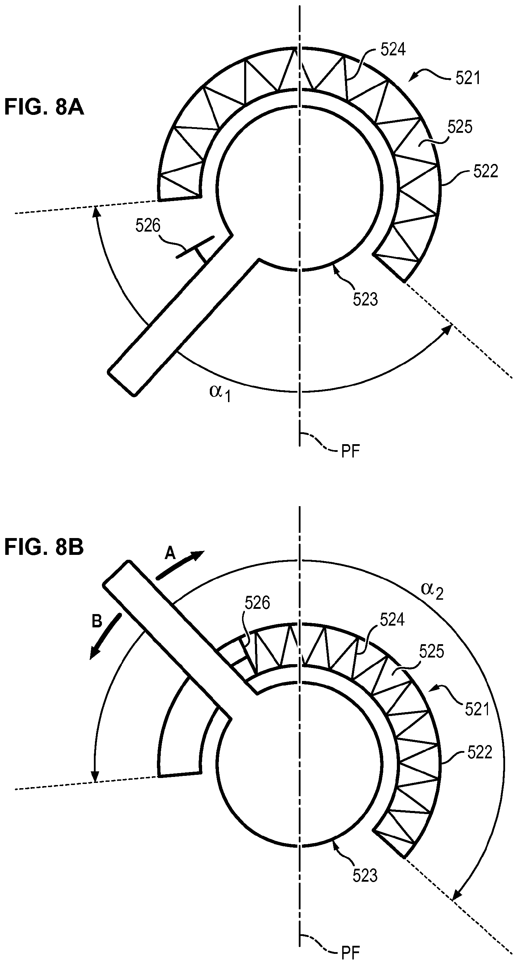

Comme illustré sur les figures 8A et 8B, l'articulation de hanche 52 comprend un actionneur de hanche 521 permettant d'assister l'utilisateur lors d'un mouvement de flexion ou d'extension de la hanche de l'utilisateur. L'actionneur 521 comprend un stator 522 et un rotor 523 propre à être entrainé en rotation par rapport au stator 522 lorsque le stator 522 est alimenté en énergie électrique pour entrainer en rotation le module de hanche 5 par rapport au module de base 1 lors d'un mouvement de flexion ou d'extension de la hanche.

L'articulation de hanche 52 comprend en outre un élément élastique 524 de rappel agencé pour exercer une force élastique de rappel qui assiste le rotor 523 lorsque l'utilisateur se relève à partir d'une position assise ou accroupie. L'élément élastique de rappel 524 peut comprendre un ressort précontraint, disposé entre le stator 522 et le rotor 523, dans une gorge de guidage 525 ménagée entre le stator 522 et le rotor 523.

Plus précisément, l'élément élastique de rappel 524 est agencé de sorte que :
- dans une première plage angulaire α₁ de déplacement du rotor 523 par rapport au stator 522, correspondant à une plage angulaire dans laquelle se trouve le rotor 523 lorsque l'utilisateur marche ou court (figure 8A), l'élément élastique de rappel 524 n'exerce aucune force de rappel sur le rotor 523, et
- dans une deuxième plage angulaire α₂ de déplacement du rotor 523 par rapport au stator 522, correspondant à une plage angulaire dans laquelle se trouve le rotor 523 lorsque l'utilisateur s'assoie ou s'accroupit (figure 8B), l'élément élastique de rappel 524 exerce une force de rappel sur le rotor 523.

A cet effet, l'articulation de hanche 52 comprend un taquet 526 monté fixe sur le rotor 523, le taquet 526 étant propre à solliciter l'élément élastique 525 en compression uniquement lorsque le rotor 523 se trouve dans la deuxième plage angulaire α₂.

Dans cette deuxième plage, la force de rappel exercée par l'élément élastique 524 tend à s'opposer à une rotation du rotor 523 par rapport au stator 522 dans un premier sens de rotation (flèche A) et à assister une rotation du rotor 523 par rapport au stator 522 dans un deuxième sens de rotation (flèche B), opposé au premier sens de rotation.

Le premier sens de rotation (flèche A) est le sens de rotation du rotor 523 par rapport au stator 522 lorsque l'utilisateur fléchit la cuisse par rapport au haut du corps (lorsque l'utilisateur s'assoit ou s'accroupit).

Le deuxième sens de rotation (flèche B) est le sens de rotation du rotor 523 par rapport au stator 522 lorsque l'utilisateur étend la cuisse par rapport au haut du corps (lorsque l'utilisateur se relève après s'être assis ou accroupi).

Autrement dit, lorsque le rotor 523 se trouve dans la deuxième plage angulaire α₂, l'élément élastique 524 exerce sur le rotor 523 une force de rappel qui tend à s'opposer à une rotation du module de hanche 5 par rapport au module de base 1 lors d'un mouvement de flexion de la hanche et à assister une rotation du module de hanche 5 par rapport au module de base 1 lors d'un mouvement d'extension de la hanche.

La première plage angulaire α₁ correspond à un déplacement en flexion ou en extension de la hanche compris par exemple entre +60 degrés et -15 degrés par rapport à un plan frontal PF de l'utilisateur.

La deuxième plage angulaire α₂ correspond à un déplacement en flexion ou en extension de la hanche supérieur à +90 degrés par rapport au plan frontal PF de l'utilisateur.

Ainsi, dans la première plage angulaire α₁ de déplacement du rotor de l'actionneur, l'utilisateur bénéficie d'une assistance active par le biais de l'actionneur 521, tandis que dans la deuxième plage angulaire α₂ de déplacement du rotor de l'actionneur, l'utilisateur bénéficie en totalité ou en supplément d'une assistance passive par le biais de l'élément élastique de rappel 524.

De cette manière, la puissance délivrée par l'actionneur 521 est limitée dans la deuxième plage angulaire de déplacement.

L'élément élastique 524 peut venir en appui contre une butée permettant de maintenir le ressort précontraint. La position de la butée par rapport au stator peut être ajustable, par exemple à l'aide de vis, de manière à pouvoir modifier les plages angulaires définies ci-dessus.

### Dispositif d'attache du module de hanche au module de base

La structure d'exosquelette comprend en outre un dispositif d'attache 8 permettant d'attacher le module de hanche 5 au module de base 1.

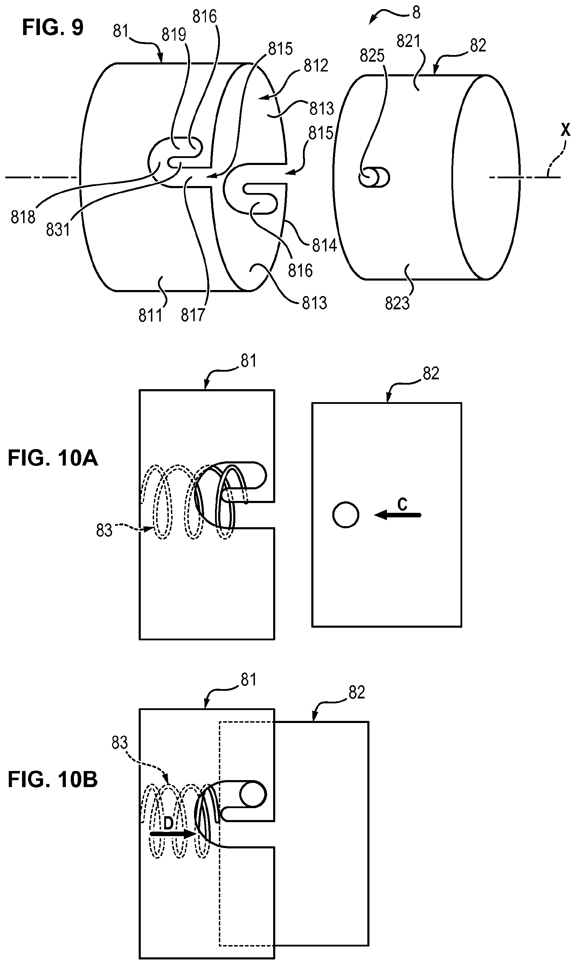

Les figures 9, 10A et 10B représentent de manière schématique le dispositif d'attache 8. Dans le mode de réalisation illustré sur ces figures, le dispositif d'attache 8 est un dispositif d'attache dit « à baïonnette ». Le dispositif d'attache 8 est propre à passer d'une configuration déverrouillée (illustrée sur la figure 10A) dans laquelle le module de hanche 5 est détaché du module de base 1, à une configuration verrouillée (illustrée sur la figure 10B) dans laquelle le module de hanche 5 est attaché au module de base 1.

Le dispositif d'attache 8 comprend une première pièce 81 montée fixe sur le module de base 1 et une deuxième pièce 82 montée fixe sur le module de hanche 5. Plus précisément, la première pièce 81 est fixée à la ceinture 11. La deuxième pièce 82 est fixée au stator 522 de l'actionneur 521.

La deuxième pièce 82 est propre à être encliquetée dans la première pièce 81, afin de permettre d'attacher le module de hanche 5 au module de base 1 de manière réversible.

La première pièce 81 comprend un corps 811 présentant une ouverture d'insertion 812, et ayant une surface interne de guidage 813, de forme cylindrique de révolution. Le corps 811 présente un bord libre 814 de forme circulaire délimitant l'ouverture d'insertion 812. La première pièce 81 comprend deux fentes 815 formées dans le corps 812 en des positions diamétralement opposées. Chaque fente 815 s'étend à partir du bord libre 814 de la première pièce 81 et présente une extrémité 816. De plus, chaque fente 815 présente une forme en U (ou en épingle à cheveux) et comprend deux portions droites 817, 819 et une portion incurvée 818. La première portion droite 817 s'étend à partir du bord libre depuis l'entrée de la fente 815 jusqu'à la portion incurvée 818, selon une direction parallèle à l'axe X de la surface interne de guidage 813. La portion incurvée 818 s'étend à partir de la première portion droite 817 jusqu'à la deuxième portion droite 819 en formant un coude. La deuxième portion droite 819 s'étend à partie de la portion incurvée jusqu'à l'extrémité 816. Les portions délimitent ainsi un bossage 831 dans le corps 811 de la première pièce 81.

La deuxième pièce 82 comprend un corps 821 ayant une surface externe de guidage 823, de forme cylindrique de révolution. La deuxième pièce 82 est propre à être insérée dans la première pièce 81 via l'ouverture 812. L'insertion de la deuxième pièce 82 dans la première pièce 81 est guidée par les surfaces cylindriques 813 et 823 en contact l'une avec l'autre. La deuxième pièce 82 comprend deux pions radiaux 825 situés en des positions diamétralement opposées, et s'étendant en saillie de la surface externe 823. Les pions radiaux 825 sont aptes à être engagés dans les fentes 815 de la première pièce 81 lorsque la deuxième pièce 82 est insérée dans la première pièce 81.

La première pièce 81 est propre à être insérée dans la deuxième pièce 82 selon une première direction (flèche C), parallèlement à l'axe X, correspondant à une direction d'insertion.

Le dispositif d'attache 8 comprend également un élément élastique de rappel 83, sous la forme d'un ressort, propre à solliciter la deuxième pièce 82 dans une deuxième direction (flèche D), opposée à la première direction. L'élément élastique 83 tend ainsi à s'opposer à l'insertion de la deuxième pièce 82 dans la première pièce 81.

En configuration déverrouillée (figure 10A), la deuxième pièce 82 est désengagée d'avec la première pièce 81.

En configuration verrouillée (figure 10B), la deuxième pièce 82 est engagée dans la première pièce 81.

Le verrouillage du dispositif d'attache 8 est réalisé en insérant la deuxième pièce 82 dans la première pièce 81 par l'ouverture d'insertion 812. Lors de cette insertion, chaque pion 825 est introduit dans une fente 815 respective.

Puis la deuxième pièce 82 est déplacée par rapport à la première pièce 81 de manière à faire coulisser chaque pion 825 dans la fente 815 dans laquelle il est reçu. Du fait de la forme de la fente 815, le coulissement du pion 825 depuis l'entrée de la fente 815 jusqu'à l'extrémité 816 de la fente 815 nécessite un mouvement combiné de translation, parallèlement à l'axe X, et de rotation, autour de l'axe X, de la deuxième pièce 82 par rapport à la première pièce 81. La deuxième pièce 82 est d'abord translatée par rapport à la première pièce 81 selon la première direction (direction d'insertion) à l'encontre de la force de rappel exercée par l'élément élastique 83. Puis la deuxième pièce 82 est translatée selon la deuxième direction, opposée à la première direction, tout en subissant une rotation par rapport à la première pièce 81 autour de l'axe X.

Une fois le pion 825 positionné à l'extrémité 816 de la fente 815, la deuxième pièce 82 est bloquée en rotation par rapport à la première pièce 81 par le bossage 831. De plus, l'élément élastique 83 sollicite la deuxième pièce 82 dans la deuxième direction, ce qui a pour effet de maintenir le pion 825 en butée contre l'extrémité 816 de la fente 815. L'élément élastique 83 et le bossage 831 bloquent le pion 825 dans la fente 815 et empêchent un désengagement du pion 815 de la fente 825.

De cette manière, la deuxième pièce 82 est maintenue encliquetée dans la première pièce 81.

Le désencliquetage de la deuxième pièce 82 est obtenu en réalisant l'opération inverse, c'est-à-dire en faisant coulisser chaque pion 815 selon le chemin inverse depuis l'extrémité 816 de la fente 815 jusqu'à l'entrée de la fente 815. Le coulissement du pion 815 depuis l'extrémité 816 de la fente 815 jusqu'à l'entrée de la fente 815 nécessite à nouveau un mouvement combiné de translation et de rotation de la deuxième pièce 82 par rapport à la première pièce 81. La deuxième pièce 82 est d'abord translatée par rapport à la première pièce 81 selon la première direction (direction d'insertion) à l'encontre de la force de rappel exercée par l'élément élastique 83 tout en subissant une rotation inverse par rapport à la première pièce 81. Puis la deuxième pièce 82 est translatée par rapport à la première pièce 81 selon la deuxième direction.

Par ailleurs, la première pièce 81 et la deuxième pièce 82 comprennent chacune des contacts électriques propres à raccorder électriquement la première batterie 12 et l'unité de commande 13 du module de base 1 à l'actionneur lorsque la deuxième pièce 82 est en configuration verrouillée dans la première pièce 81.

### Module de genou

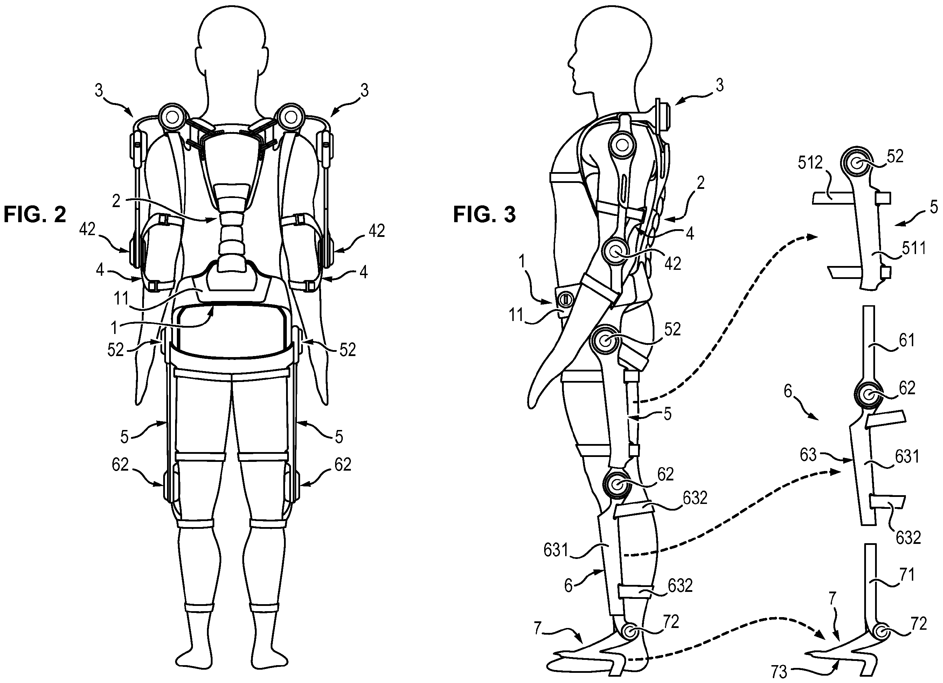

Comme illustré sur la figure 3, chaque module de genou 6 comprend une barre de raccordement 61, une articulation de genou 62 et une partie tibiale 63 propre à être fixée sur le mollet de l'utilisateur.

La barre de raccordement 61 est propre à coulisser à l'intérieur du segment fémoral 511 du module de hanche 5 de manière à fixer le module de genou 6 au module de hanche 5, tout en autorisant un réglage de la distance entre l'articulation de hanche 52 et l'articulation de genou 62. Une vis de fixation permet d'immobiliser la barre de raccordement 61 par rapport au segment fémoral 511.

La partie tibiale 63 comprend un segment tibial 631 prévu pour s'étendre le long du mollet de l'utilisateur et des sangles de fixation 632 propres à entourer le mollet de l'utilisateur pour fixer le segment 631 au mollet.

Une fois le module de genou 6 fixé au module de hanche 5, la partie tibiale 51 est reliée à la partie fémorale 63 par le biais de l'articulation de genou 62. L'articulation de genou 62 autorise une rotation de la partie tibiale 63 par rapport à la partie fémorale 51 dans un plan parallèle au plan sagittal de l'utilisateur (correspondant à une flexion ou extension du genou de l'utilisateur).

L'articulation de genou 62 peut comprendre un actionneur permettant d'assister l'utilisateur lors d'un mouvement de flexion ou d'extension du genou.

L'actionneur de l'articulation de genou 62 peut être identique à l'actionneur 521 de l'articulation de hanche illustré sur les figures 8A et 8B. En particulier, l'actionneur peut comprendre un stator, un rotor propre à être entrainé en rotation par rapport au stator pour entrainer en rotation le module de genou par rapport au module de hanche lors d'un mouvement de flexion ou d'extension du genou, et un élément élastique de rappel agencé pour exercer une force élastique de rappel qui assiste l'actionneur lorsque l'utilisateur se relève à partir d'une position assise ou accroupie. L'élément élastique de rappel peut comprendre un ressort précontraint, disposé entre le stator et le rotor, dans une gorge de guidage ménagée entre le stator et le rotor.

Toutefois, dans le cas d'un actionneur d'articulation de genou, les plages angulaires sont différentes. La première plage angulaire α₁ correspond à un déplacement en flexion ou en extension du genou compris par exemple entre +15 degrés et -60 degrés par rapport à un plan frontal PF de l'utilisateur. La deuxième plage angulaire α₂ correspond à un déplacement en flexion ou en extension du genou inférieur à -60 degrés par rapport au plan frontal PF de l'utilisateur.

L'ajustement des plages angulaires peut être obtenu en modifiant la position de la butée sur laquelle s'applique le ressort, par rapport au stator.

### Module de pied

Comme illustré sur la figure 3, le module de pied 7 est attaché au module de genou 6.

Le module de pied 7 comprend une barre de raccordement 71, une articulation de cheville 72 et une partie de pied 73 propre à être fixée sur le pied de l'utilisateur.

La barre de raccordement 71 est propre à coulisser à l'intérieur du segment tibiale 631 du module de genou 6 de manière à fixer le module de pied 7 au module de genou 6, tout en autorisant un réglage de la distance entre l'articulation de genou 62 et l'articulation de cheville 72. Une vis de fixation permet d'immobiliser la barre de raccordement 71 par rapport au segment tibial 631.

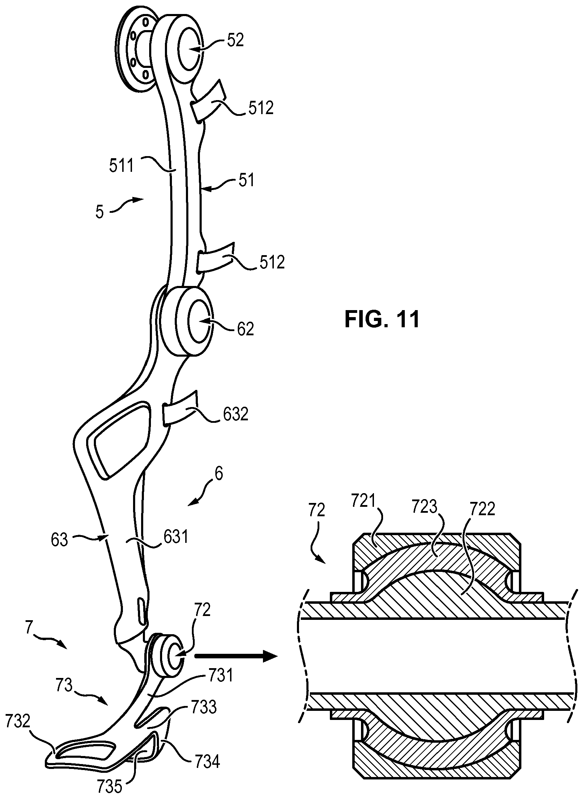

Comme illustré sur la figure 11, la partie de pied 73 comprend un premier segment 731, une première plaque d'appui 732, un deuxième segment 733, un troisième segment 734 et une deuxième plaque d'appui 735.

L'articulation de cheville 72 autorise une rotation du module de pied 7 par rapport au module de genou 6 lors d'un mouvement de flexion ou d'extension, lors d'un mouvement de pronation ou de supination et lors d'un mouvement d'éversion ou d'inversion de la cheville de l'utilisateur.

L'articulation de cheville 72 comprend une première armature 721, une deuxième armature 722 propre à tourner par rapport à la première armature 721 lors d'un mouvement de rotation du pied de l'utilisateur par rapport au mollet, et un élément élastique 723 disposé entre les armatures 721 et 722.

La première armature 721 est montée fixe sur la barre de raccordement 71 du module de pied 7 et la deuxième armature 722 est montée fixe sur le premier segment 731 de la partie de pied 73.

L'élément élastique 723 comprend un anneau formé en un matériau élastomère, précomprimé entre la première armature 721 et la deuxième armature 722. L'élément élastique 723 est propre à exercer une force de rappel tendant à s'opposer à la rotation relative de la deuxième armature 722 par rapport à la première armature 721.

Le premier segment 731 relie l'articulation de cheville 72 à la première plaque d'appui 732. Plus précisément, le premier segment 731 présente une première extrémité fixée à la deuxième armature 722 et une deuxième extrémité fixée à la première plaque d'appui 732.

Le deuxième segment 733 et le troisième segment 734 relient la première plaque d'appui 732 à la deuxième plaque d'appui 735 en formant un angle entre eux.

La deuxième plaque d'appui 735 peut présenter sur sa surface inférieure, destinée à être en contact avec le sol, un revêtement antidérapant, par exemple en caoutchouc rainuré.

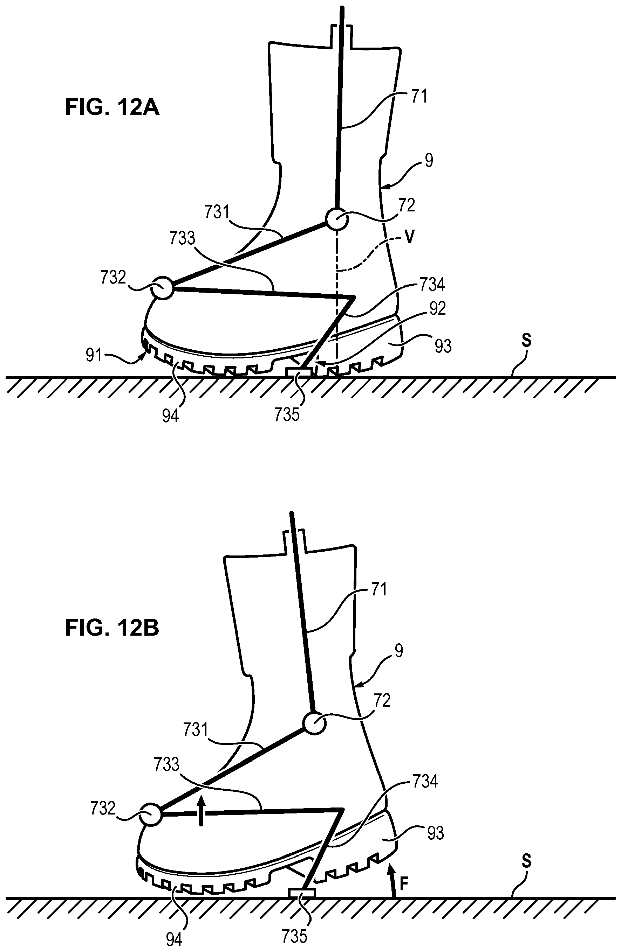

Sur les figures 12A à 12D, le module de pied 7 est utilisé avec une chaussure 9, de type « ranger » ou « chaussure de combat » par exemple. La chaussure 9 est conçue pour supporter une charge s'appliquant sur le dessus de la chaussure 9 pouvant aller jusqu'à 40 kilogrammes. La chaussure 9 peut en outre comprendre une coquille de protection de l'avant du pied et/ou des éléments de renfort en métal.

Comme illustré sur la figure 12A, la première plaque d'appui 732 est prévue pour venir en appui sur le dessus de la chaussure 9 de l'utilisateur.

La deuxième plaque d'appui 735 est prévue pour venir en appui sur le sol S lorsque l'utilisateur se tient debout sur le sol. La deuxième plaque d'appui 735 est agencée de sorte qu'elle est disposée sous la semelle 91 de la chaussure 9 de l'utilisateur, dans un renfoncement 92 formé dans la semelle entre le talon 93 et l'avant-pied 94.

Le premier segment 731 et le deuxième segment 733 forment un ressort en forme de V. Le ressort est propre à être comprimé lorsque la semelle 91 de la chaussure 9 est en contact avec le sol (les segments 731 et 733 sont rapprochées l'un de l'autre) et à être détendu lorsque la semelle 91 de la chaussure 9 n'est pas en contact avec le sol S (les segments 731 et 733 sont éloignées l'une de l'autre).

Le deuxième segment 733 et le troisième segment 734 sont reliés entre eux par un angle situé sous l'articulation de cheville 72. Plus précisément, l'axe vertical V passant par le centre de rotation de l'articulation de cheville 72 coupe les deux segments 733 et 734, lorsque l'utilisateur est en position debout. Cette position des segments 733 et 734 par rapport à l'articulation de cheville 72 permet de créer une déformation de la partie de pied 73 vers le bas, et donc assure que la partie de pied 73 tend à appuyer sur l'avant de la chaussure 9, et non à soulever l'avant de la chaussure.

Les figures 12A à 12E illustrent différentes phases du cycle de marche de l'utilisateur.

Sur la figure 12A, la semelle 91 de la chaussure 9 est en contact avec le sol S. Durant cette phase, la deuxième plaque d'appui 735 est en contact avec le sol S. Le ressort formé par les segments 731 et 733 est comprimé de sorte que le poids s'exerçant sur le module de pied 7 est transféré au sol S via la deuxième plaque d'appui 735.

Sur la figure 12B, le talon 93 de la chaussure 9 décolle du sol S. Au cours de cette phase, le ressort formé par les segments 731 et 733 se détend. En se détendant, le ressort exerce sur le module de pied 7 une force de rappel F vers le haut qui assiste l'utilisateur pour soulever le pied.

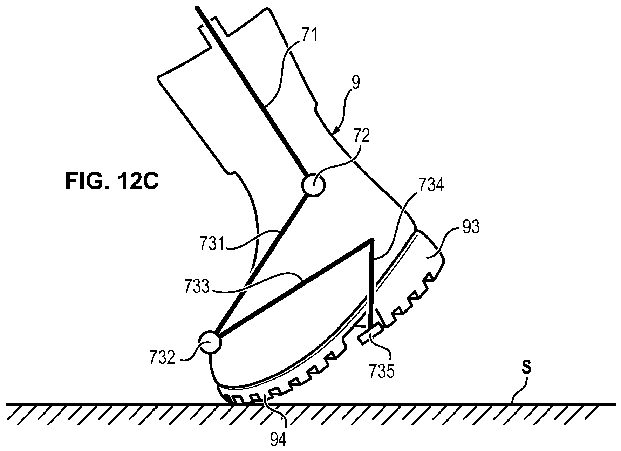

Sur la figure 12C, seule l'avant 94 de la semelle 91 de la chaussure 9 est en contact avec le sol S. Le ressort formé par les segments 731 et 733 est détendu. Le poids s'exerçant sur le module de pied 7 est alors transféré à la chaussure 9 via la première plaque d'appui 732. Tant que la chaussure 9 est en contact avec le sol, le poids est transféré au sol via la chaussure 9.

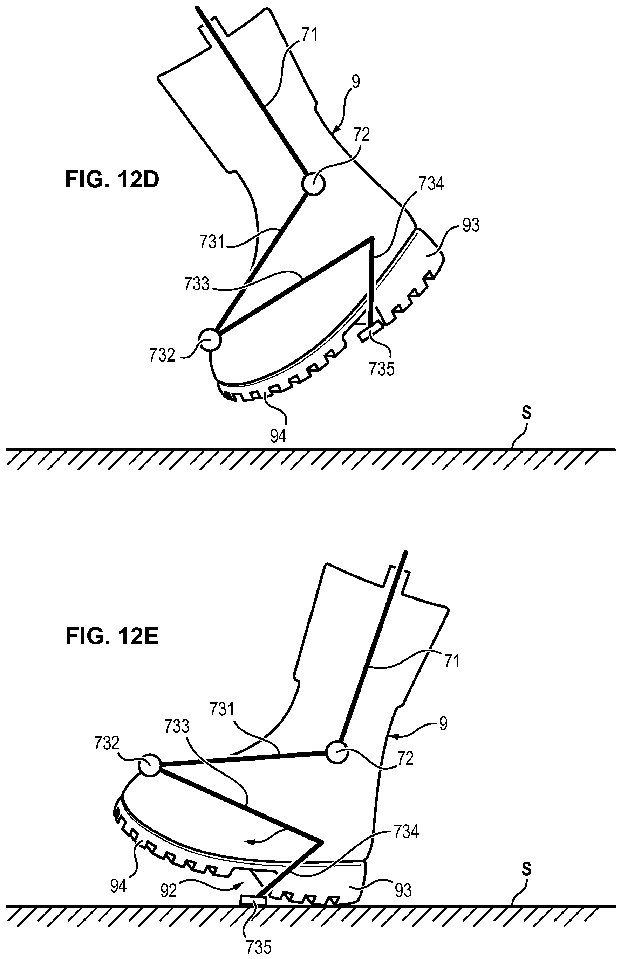

Sur la figure 12D, une fois le pied soulevé du sol S, le poids s'exerce principalement sur l'autre module de pied 7 de la structure d'exosquelette.

Sur la figure 12E, l'utilisateur pose à nouveau le talon 93 sur le sol S. Au cours de cette phase, la deuxième plaque d'appui 735 est à nouveau en contact avec le sol S, ce qui a pour effet de comprimer le ressort formé par les segments 731 et 733. Le ressort formé par les segments 731 et 733 est comprimé jusqu'à ce que le poids s'exerçant sur le module de pied soit transféré au sol S via la deuxième plaque d'appui 735.

Le module de pied 7 permet de transférer la charge qui s'exerce sur l'exosquelette vers le sol S : au cours de la marche, la charge est transférée vers le sol successivement via la deuxième plaque d'appui 735, puis via la première plaque d'appui 732 et la chaussure 9 de l'utilisateur.

Le module de pied 7 permet de s'adapter aux chaussures couramment utilisées par les militaires, sans nécessiter de modifier la chaussure. Le module de pied 7 peut être utilisé avec une chaussure standard et ne nécessite pas de modifier ou d'adapter la chaussure.

Le module de pied 7 permet en outre de transférer au sol la charge porté par l'utilisateur, y compris pendant les phases de marche, et ce sur tout type de terrain.

### Module de dos

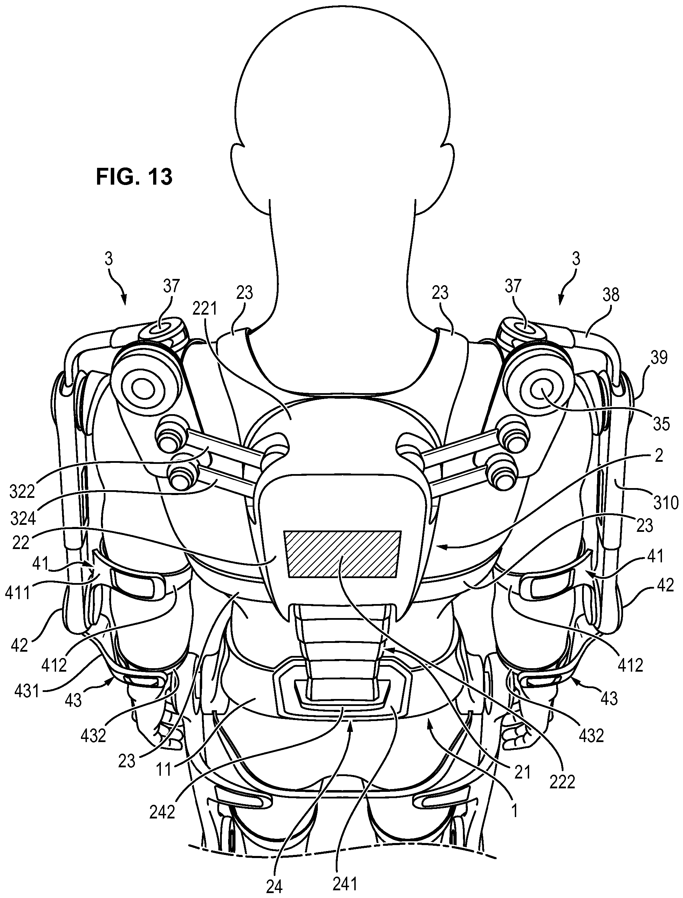

La figure 13 représente de manière schématique, en vue agrandie, le module de dos 2.

Le module de dos 2 comprend un segment de colonne vertébrale 21, un dosseret 22 et des sangles 23 permettant de fixer le dosseret 22 au dos de l'utilisateur.

Le segment de colonne vertébrale 21 s'étend le long de la colonne vertébrale de l'utilisateur lorsque le module de dos 2 est fixé sur le dos de l'utilisateur. Plus précisément, le segment de colonne vertébrale 21 s'étend entre la ceinture 11 du module de base 1 et le dosseret 22.

Le dosseret 22 comprend un carter 221 et une deuxième batterie 222 logée dans le carter 221.

Chaque module d'épaule 3 est propre à être raccordé au module de dos 2.

La structure d'exosquelette comprend en outre un dispositif d'attache 24 permettant d'attacher le module de dos 2 au module de base 1.

Le dispositif d'attache 24 comprend troisième pièce 241 montée fixe sur le module de base 1 et une quatrième pièce 242 montée fixe sur le module de dos 2. Plus précisément, la troisième pièce 241 est fixée à la ceinture 11. La quatrième pièce 242 est fixée à une extrémité inférieure du segment de colonne vertébrale 21.

La quatrième pièce 242 est propre à être fixée à la troisième pièce 241, par exemple à l'aide de vis, pour attacher le module de dos 2 au module de base 1.

En outre, la troisième pièce 241 et la quatrième pièce 242 comprennent un socle et une fiche propre à être enfichée dans le socle pour raccorder électriquement la deuxième batterie 222 du module de dos 2 à l'unité de commande 13 du module de base 1 lorsque la quatrième pièce 242 est fixée à la troisième pièce 241.

### Segment de colonne vertébrale

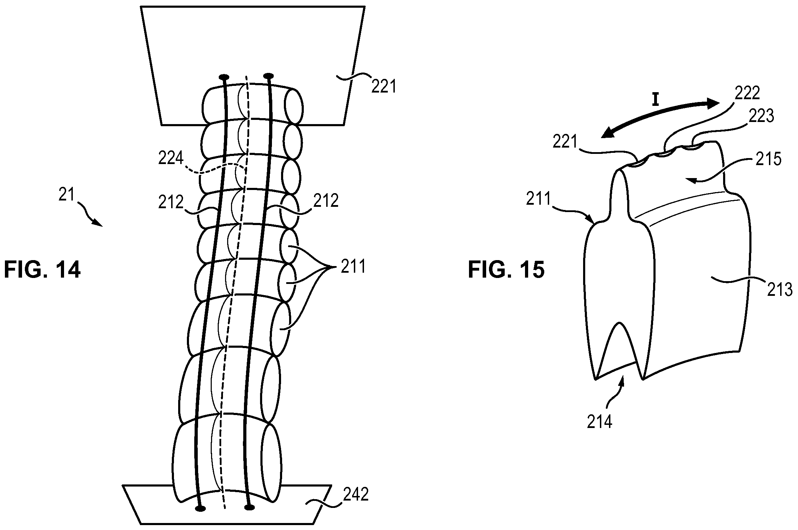

La figure 14 illustre plus précisément le segment de colonne vertébrale 21. Le segment de colonne vertébrale 21 comprend une pluralité d'éléments de vertèbre 211 empilés les uns sur les autres.

Le nombre d'éléments de vertèbre 211 peut être ajusté en fonction de la taille de l'utilisateur, ce qui permet d'adapter facilement la structure d'exosquelette à la morphologie de l'utilisateur.

Alternativement ou en complément, le dosseret 22 peut être monté coulissant le long du segment de colonne vertébrale 21 afin de permettre un réglage du module de dos 2.

Les éléments de vertèbre 211 peuvent être formés en un matériau rigide et léger, tel qu'un matériau composite à base de polyépoxyde chargé avec des fibres de carbone par exemple.

Le segment de colonne vertébrale 21 comprend en outre un ou plusieurs élément(s) flexibles de raccordement 212 permettant de raccorder les éléments de vertèbres 211 les uns aux autres.

Dans l'exemple illustré sur la figure 14, chaque élément flexible de raccordement 212 s'étend à l'intérieur de l'empilement, en passant à travers chacun des éléments de vertèbres 211. Toutefois, en variante, le segment de colonne vertébrale 21 pourrait comprendre un élément flexible de raccordement sous la forme d'une gaine tubulaire souple enrobant les éléments de vertèbre 211.

Dans l'exemple illustré sur la figure 14, chaque élément flexible de raccordement 212 est un élément allongé, tel qu'un câble ou un cordon élastique.

Chaque élément flexible de raccordement 212 présente une première extrémité raccordée au carter 221 du dosseret 22 et une deuxième extrémité raccordée à la quatrième pièce de fixation 242.

Chaque élément flexible de raccordement 212 est maintenu tendu à l'intérieur des éléments de vertèbres 211 de manière à exercer une force de compression longitudinale sur les éléments de vertèbre 211. La force de compression a pour effet de maintenir les éléments de vertèbre 211 serrés en appui les uns contre les autres.

De cette manière, le segment de colonne vertébrale 21 présente une position d'équilibre stable.

Toutefois, du fait de leur élasticité, les éléments flexibles de raccordement 211 autorisent une déformation du segment de colonne vertébral 21 lors de mouvements du dos de l'utilisateur (mouvements de flexion et/ou de rotation radiale et/ou d'inclinaison latérale du dos), tout en exerçant sur les éléments de vertèbre 211 une force de rappel tendant à ramener le segment de colonne vertébrale 21 dans sa position d'équilibre stable.

Comme illustré sur la figure 15, chaque élément de vertèbre 211 comprend un corps 213 présentant une forme arquée, avec une concavité orientée vers le bas de la colonne vertébrale lorsque le segment de colonne vertébrale 21 s'étend le long de la colonne vertébrale de l'utilisateur et que l'utilisateur est debout.

Chaque élément de vertèbre 211 présente un renfoncement 214 et une protubérance 215, chaque protubérance 215 étant propre à être reçue dans un renfoncement 214 d'un autre élément de vertèbre 211 situé immédiatement au-dessus ou au-dessous dans l'empilement.

Chaque élément de vertèbre 211 est ainsi relié à l'élément de vertèbre suivant par emboitement d'une protubérance 215 dans un renfoncement 214. Le renfoncement 214 et la protubérance 215 présentent des formes telles qu'ils autorisent un mouvement I d'inclinaison latérale de l'élément de vertèbre 211 par rapport au suivant. Ainsi, le renfoncement 214 et la protubérance 215 forment une liaison entre deux éléments de vertèbres 211 autorisant une inclinaison latérale du tronc de l'utilisateur.

Par ailleurs, chaque élément de vertèbre 211 présente des canaux 221 à 223 ménagés à l'intérieur du corps 213 pour le passage des éléments flexibles de raccordement 212 et pour le passage de câble(s) de transmission électrique 224.

Le module de dos 2 comprend en outre un ou plusieurs câble(s) 224 de transmission électrique ou de transmission de données s'étendant à l'intérieur du segment de colonne vertébrale 21 à travers chacun des éléments de vertèbres 211, pour le raccordement de la deuxième batterie 222 et des actionneurs ou des capteurs du module de dos 2 à l'unité de commande 13 du module de base 1.

Il est à noter que le ou les câble(s) de transmission électrique 224 présentent une longueur supérieure à la longueur du segment de colonne vertébrale 21 de sorte qu'ils autorisent une déformation du segment de colonne vertébrale 21, sans risquer d'endommager le ou les câble(s).

Le segment de colonne vertébrale 21 permet à la fois de transmettre une charge verticale s'exerçant sur le module de dos 2 tout en autorisant une certaine liberté de mouvement de la colonne vertébrale de l'utilisateur.

### Module de coude

Comme illustré sur les figures 1 à 5 et 13, chaque module de coude 4 comprend une partie humérale 41 propre à être fixée sur le bras de l'utilisateur, une articulation de coude 42 et une partie radiale 43 propre à être fixée sur l'avant-bras de l'utilisateur.

La partie humérale 41 comprend un segment huméral 411 propre à s'étendre le long du bras de l'utilisateur et des sangles de fixation 412 propres à entourer le bras de l'utilisateur pour fixer le segment huméral 411 au bras.

La partie radiale 43 comprend un segment radial 431 propre à s'étendre le long de l'avant-bras de l'utilisateur et des sangles de fixation 432 propres à entourer l'avant-bras de l'utilisateur pour fixer le segment radial 431 à l'avant-bras.

La partie radiale 43 est reliée à la partie humérale 41 par le biais de l'articulation de coude 42. L'articulation de coude 42 autorise une rotation de la partie radiale 43 par rapport à la partie humérale 41 correspondant à un mouvement de flexion ou d'extension du coude de l'utilisateur. L'articulation de coude 42 peut comprendre en outre un actionneur de coude pour assister l'utilisateur lors du mouvement de flexion ou d'extension du coude.

### Module d'épaule

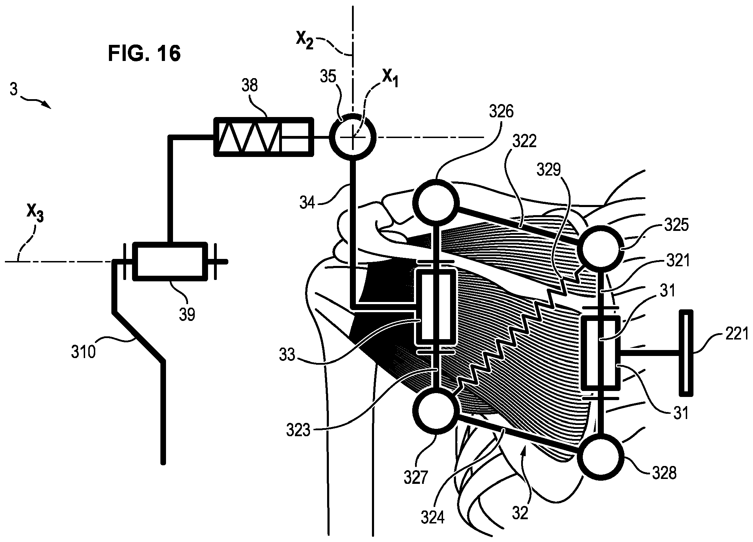

Les figures 16 à 18 représentent de manière schématique un module d'épaule 3.

Chaque module d'épaule 3 est propre à relier un module de coude 4 au module de dos 2.

Le module d'épaule 3 autorise un mouvement du module de coude 4 par rapport au module de dos 2 selon trois degrés de libertés, à savoir :
- une rotation du module de coude 4 autour d'un premier axe parallèle à un axe d'abduction ou d'adduction de l'épaule,
- une rotation du module de coude autour d'un deuxième axe parallèle à un axe de rotation externe ou interne de l'épaule,
- une rotation du module de coude autour d'un troisième axe parallèle à un axe de flexion ou d'extension de l'épaule.

Le module d'épaule 3 comprend un premier pivot 31, un mécanisme à quatre barres 32, un deuxième pivot 33, une première pièce de liaison 34, un troisième pivot 35, une deuxième pièce de liaison 36, un quatrième pivot 37, une troisième pièce de liaison 38, un cinquième pivot 39, et une troisième pièce de liaison 310.

Le mécanisme à quatre barres 32 comprend une première barre 321, une deuxième barre 322, une première articulation 325 reliant la deuxième barre 322 à la première barre 321, une troisième barre 323, une deuxième articulation 326 reliant la troisième barre 323 à la deuxième barre 322, une quatrième barre 324, une troisième articulation 327 reliant la quatrième barre 324 à la troisième barre 323 et une quatrième articulation 328 reliant la quatrième barre 324 à la première barre 321.

Les quatre barres 321 à 324 sont reliées entre elles par les quatre articulations 325 à 328 de manière à former un parallélogramme déformable dans un plan parallèle au plan coronal de l'utilisateur. Le mécanisme à quatre barres 32 comprend en outre un élément élastique 329, s'étendant selon une diagonale du parallélogramme et reliant la première articulation 325 à la troisième articulation 327 de manière à créer, sur les quatre barres 321 à 324, une force de rappel tendant à s'opposer à une déformation du parallélogramme due à la force de gravité s'exerçant sur le module d'épaule 3. L'élément élastique de rappel 329 est un ressort de traction dont l'une des extrémités est reliée à la première articulation 325 et l'autre des extrémités est reliée à la troisième articulation 327.

La première barre 321 est monté rotative par rapport au carter 221 du dosseret 22 par le biais de la première liaison pivot 31, autour d'un axe sensiblement vertical.

De même, la troisième barre 323 est montée rotative par rapport à la première pièce de liaison 34 par le biais du deuxième pivot 33, autour d'un axe sensiblement vertical.

La deuxième pièce de liaison 36 est montée rotative par rapport à la première pièce de liaison 34 par l'intermédiaire du troisième pivot 35. Le troisième pivot 35 comprend un actionneur.

L'actionneur comprend un stator et un rotor propre à être entrainé en rotation par rapport au stator autour du premier axe de rotation, le premier axe de rotation étant perpendiculaire à l'axe du deuxième pivot 33. L'actionneur permet d'assister l'utilisateur lors d'un mouvement d'abduction ou d'adduction de l'épaule. A cet effet, le premier axe de rotation X₁ est parallèle à l'axe d'abduction ou d'adduction de l'épaule.

La troisième pièce de liaison 38 est reliée à la deuxième pièce de liaison 36 par l'intermédiaire du quatrième pivot 37. Le quatrième pivot 37 autorise une rotation de la troisième pièce de liaison 38 par rapport à la deuxième pièce de liaison 36 autour d'un deuxième axe de rotation X₂ correspondant à un mouvement de rotation externe ou interne du bras de l'utilisateur.

La quatrième pièce de liaison 310 est montée rotative par rapport à la troisième pièce de liaison par l'intermédiaire du cinquième pivot 39. Le cinquième pivot 39 autorise une rotation de la quatrième pièce de liaison 310 par rapport à la troisième pièce de liaison 38 autour d'un troisième axe de rotation X₃. Le cinquième pivot 39 comprend un actionneur.

L'actionneur comprend un stator et un rotor propre à être entrainé en rotation par rapport au stator autour du troisième axe de rotation X₃, le troisième axe de rotation X₃ étant perpendiculaire à l'axe du quatrième pivot 37. L'actionneur permet d'assister l'utilisateur lors d'un mouvement de flexion ou d'extension de l'épaule. A cet effet, le troisième axe de rotation X₃ est parallèle à l'axe de flexion et d'extension de l'épaule.

Le premier axe de rotation X₁ du troisième pivot 35 coupe le deuxième axe de rotation X₂ du quatrième pivot 37, perpendiculairement à celui-ci. De même, le troisième axe de rotation X₃ du cinquième pivot 39 coupe le deuxième axe de rotation X₂ du quatrième pivot 37, perpendiculairement à celui-ci. Toutefois, le premier axe de rotation X₁ et le troisième axe de rotation X₃ coupent le deuxième axe de rotation X₂ en des points distincts.

Lorsque le bras de l'utilisateur est au repos (c'est-à-dire que le bras s'étend le long du corps de l'utilisateur en position debout), le deuxième axe de rotation X₂ du quatrième pivot 37 est parallèle à l'axe de rotation du deuxième pivot 33. En outre, le troisième axe de rotation X₃ est perpendiculaire au premier axe de rotation X₁ du troisième pivot 35 et au deuxième axe de rotation X₂ du quatrième pivot 37.

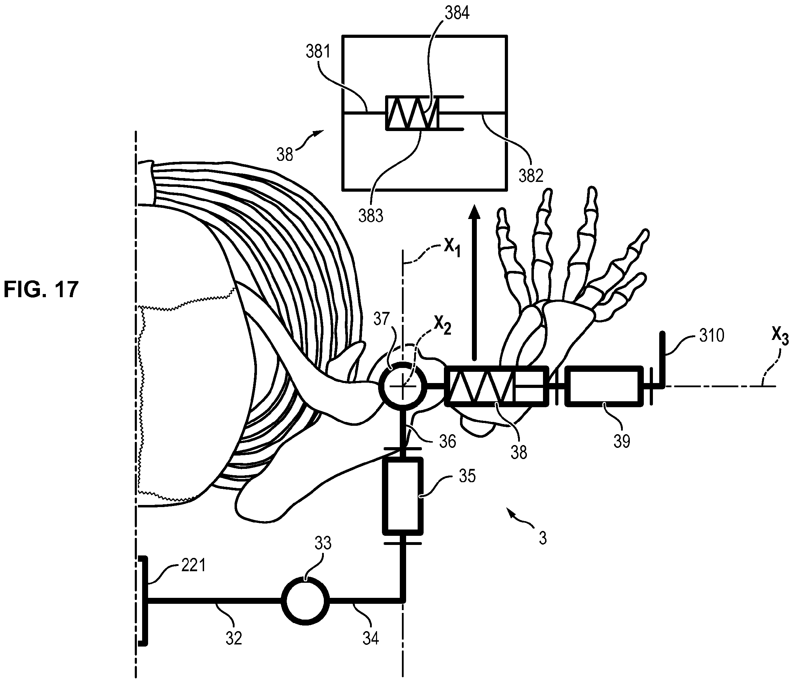

Comme illustré sur la figure 17, la troisième pièce de liaison 38 comprend deux pièces 381 et 382 montées coulissantes l'une par rapport à l'autre par le biais d'une première glissière 383. Le coulissement des pièces 381 et 382 l'une par rapport à l'autre autorise un raccourcissement ou un allongement de la troisième pièce de liaison 38 lors de mouvements d'abduction ou d'adduction de l'épaule de l'utilisateur. La première glissière 383 comprend un premier élément élastique de rappel 384 tendant à s'opposer à l'écartement des pièces 381 et 382 l'une par rapport à l'autre, et donc à un allongement de la troisième pièce de liaison 38. Le premier élément élastique de rappel 384 est un ressort de traction.

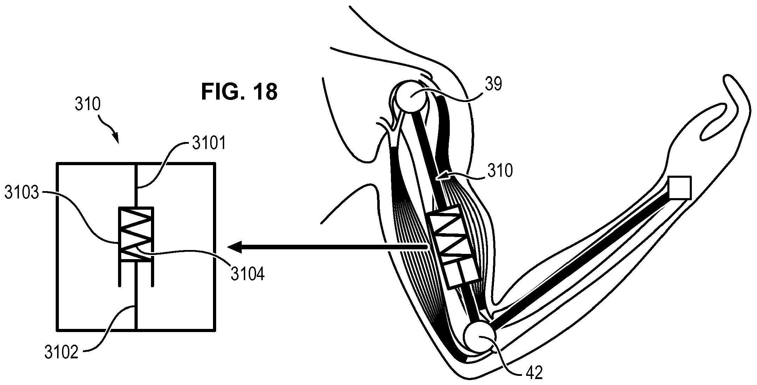

Comme illustré sur la figure 18, la quatrième pièce de liaison 310 comprend deux pièces 3101 et 3102 montées coulissantes l'une par rapport à l'autre par le biais d'une deuxième glissière 3103. Le coulissement des pièces 3101 et 3102 l'une par rapport à l'autre autorise un raccourcissement et un allongement du de la quatrième pièce de liaison 310 lors d'une rotation de l'avant-bras de l'utilisateur par rapport au bras provoquant une flexion ou une extension du coude. La deuxième glissière 3103 comprend un deuxième élément élastique de rappel 3104 tendant à s'opposer à l'écartement des pièces 3101 et 3102 l'une par rapport à l'autre, et donc à un allongement de la quatrième pièce de liaison 310. Le deuxième élément élastique de rappel 3104 est un ressort de traction.

Comme les axes de rotation X₁, X₂ et X₃ du module d'épaule 3 ne coïncident pas avec les axes réels de rotation du complexe articulaire de l'épaule de l'utilisateur, les deux glissières 383 et 3103 permettent de faire varier la longueur de la troisième pièce de liaison 38 et la longueur de la quatrième pièce de liaison 310 afin de compenser le décalage des axes de rotation.

La quatrième pièce de liaison 310 est reliée à l'articulation de coude 42 du module de coude par le biais d'un dispositif d'attache 10.

### Dispositif d'attache du module d'épaule au module de coude

La structure d'exosquelette comprend deux dispositif d'attache 10, chaque dispositif d'attache 10 permettant d'attacher un module d'épaule 3 à un module de coude 4.

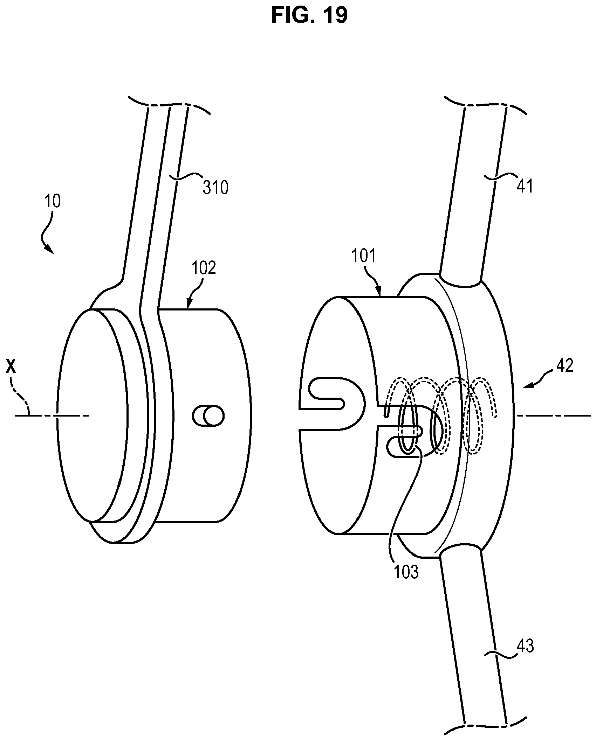

La figure 19 représentent de manière schématique le dispositif d'attache 10. Dans le mode de réalisation illustré sur cette figure, le dispositif d'attache 10 est un dispositif d'attache dit « à baïonnette », similaire au dispositif d'attache 8 du module de hanche 5 au module de base 1 illustré sur les figures 9, 10A et 10B.

Le dispositif d'attache 10 est propre à passer d'une configuration déverrouillée dans laquelle le module d'épaule 3 est détaché du module de coude 4, à une configuration verrouillée dans laquelle le module d'épaule 3 est attaché au module de coude 4.

Le dispositif d'attache 10 comprend une première pièce 101 montée fixe sur le module de coude 4 et une deuxième pièce 102 montée mobile en rotation sur le module d'épaule 3.

Plus précisément, la première pièce 101 est fixée au stator de l'actionneur de l'articulation de coude 42. La deuxième pièce 102 est montée rotative sur la quatrième pièce de liaison 310 du module d'épaule 3 autour d'un axe X parallèle à la direction d'insertion de la deuxième pièce 102 dans la première pièce 101.

La deuxième pièce 102 est propre à être encliquetée dans la première pièce 101, afin de permettre d'attacher le module d'épaule 3 au module de coude 4 manière réversible.

La première pièce 101 et la deuxième pièce 102 sont identiques à la première pièce 81 et à la deuxième pièce 82 du dispositif d'attache 8 du module de hanche 5 au module de base 1. Le dispositif d'attache 10 comprend également un élément élastique de rappel 103, sous la forme d'un ressort, propre à solliciter la deuxième pièce 102 dans une direction, opposée à la direction d'insertion de la deuxième pièce 102 dans la première pièce 101.

Par ailleurs, la première pièce 101 et la deuxième pièce 102 comprennent chacune des contacts électriques propres à raccorder électriquement la première batterie 12 et l'unité de commande 13 du module de base 1 à l'actionneur de l'articulation de coude 42 lorsque la deuxième pièce 102 est en configuration verrouillée dans la première pièce 101.

### Module de support de sac à dos

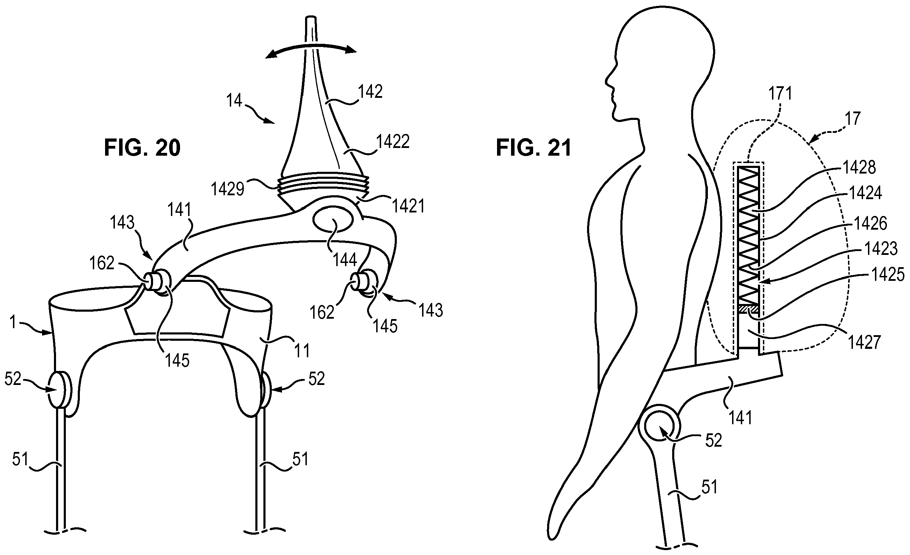

Comme illustré sur les figures 20 et 21, le module de support de sac à dos 14 comprend un arceau 141 et une tige de support 142.

L'arceau 141 est destiné à être relié au module de base 1. L'arceau présente deux extrémités opposées 143.

Le module de support de sac à dos 14 comprend également deux rotules 145 et deux dispositifs d'attache 16 permettant de raccorder l'arceau aux modules de hanche 5.

De cette manière, le poids du sac à dos est transféré vers les modules inférieurs, à savoir les modules de hanche 5, les modules de genou 6 et les modules de pied 7, ce qui permet à l'utilisateur de d'alléger la charge s'appliquant sur le dos.

La tige de support 142 est destinée à s'étendre le long du dos de l'utilisateur, parallèlement à la colonne vertébrale de l'utilisateur. La tige 142 est propre être engagée dans une poche 171 d'un sac à dos 17 pour suspendre le sac à dos 17 au module de support de sac à dos 14.

La tige 142 comprend un premier élément de tige 1421, un deuxième élément de tige 1422 et un amortisseur1423.

Le premier élément de tige 1421 est raccordé à l'arceau 141 par un pivot 144 autorisant une rotation de la tige 142 par rapport à l'arceau 141. Le pivot 144 autorise une rotation de la tige 142 par rapport à l'arceau 141 autour d'un axe antéro-postérieur de l'utilisateur. Le pivot 144 permet au module de support de sac à dos 14 de s'adapter aux mouvements du bassin de l'utilisateur lors de la marche ou de la course.

Le deuxième élément de tige 1422 est propre à coulisser par rapport au premier élément de tige 1421 de manière à faire varier une longueur de la tige 142.

Le premier élément de tige 1421 et le deuxième élément de tige 1422 peuvent être formés en un matériau synthétique (par exemple un matériau composite à base de polyépoxyde) renforcé avec des fibres de carbone. De plus, le deuxième élément de tige 1422 peut comprendre une partie d'extrémité formée en métal.

Le premier élément de tige 1422 peut être télescopique de manière à autoriser un réglage de la longueur de la tige 142.

L'amortisseur 1423 est adapté pour amortir le déplacement du deuxième élément de tige 1422 par rapport au premier élément de tige 1421 causé par la marche de l'utilisateur.

L'amortisseur 1423 permet ainsi de réduire les à-coups provoqués par des mouvements du sac à dos 17 sur la structure d'exosquelette lorsque l'utilisateur marche, court ou saute.

A cet effet, l'amortisseur 1423 comprend un cylindre 1424 fixé au premier élément de tige 1421, un piston 1425 fixé au deuxième élément de tige 1422 et propre à coulisser à l'intérieur du cylindre 1424, et un élément élastique 1426 agencé entre le premier élément de tige 1421 et le deuxième élément de tige 1422.

Le piston 1425 délimite à l'intérieur du cylindre 1424 deux chambres 1427 et 1428 contenant un fluide, le coulissement du piston 1425 à l'intérieur du cylindre 1424 provoquant une compression du fluide contenu dans l'une des chambres 1427, et un transfert du fluide vers l'autre chambre 1428.

L'élément élastique 1426 présente de préférence une raideur supérieure ou égale à 2000 Newtons par mètre. Une telle raideur permet d'éliminer les phénomènes d'amplification des oscillations du sac à dos qui pourraient se produire dans le cas où le système masse-ressort formé par le sac à dos 17 et l'élément élastique 1426 entreraient en résonance lors de la marche ou de la course de l'utilisateur.

Par ailleurs, l'amortisseur 1423 peut présenter un taux d'amortissement réglable ce qui permet d'adapter l'amortissement à la masse du sac à dos. En effet, la masse du sac à dos peut varier en fonction du type de mission réalisée par l'utilisateur. Le réglage du taux d'amortissement peut être obtenu en modifiant le volume total des chambres 1427 et 1428 (par exemple à l'aide d'une vis) de manière à ajuster un taux d'amortissement de l'amortisseur.

Le module de support de sac à dos 14 comprend en outre un joint de protection à soufflets 1429 reliant le premier élément de tige 1421 au deuxième élément de tige 1422. Le joint de protection à soufflets 1429 autorise un allongement de la tige 142 tout en empêchant la pénétration de liquide ou de débris à l'intérieur de la tige 142 et de l'amortisseur 1423.

Par ailleurs, le module de support de sac à dos 14 peut comprendre un capteur de force pour évaluer la masse du sac 17 porté. Le capteur de force peut être un capteur de force à jauge de contrainte, en compression. Le capteur peut être disposé dans la partie inférieure de la tige 142 au-dessus de l'amortisseur 1423.

### Dispositif d'attache du module de support de sac à dos au module de hanche

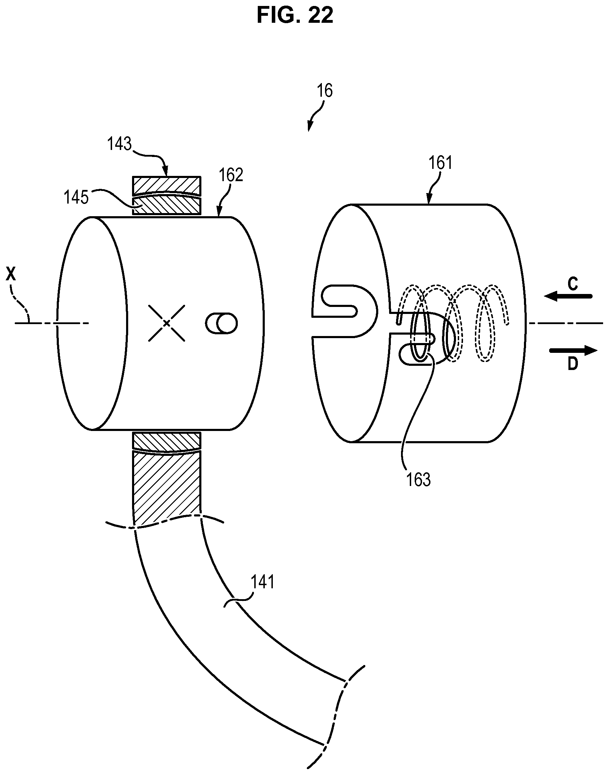

La figure 22 représente de manière schématique un dispositif d'attache 16 permettant de raccorder une extrémité 143 de l'arceau 141 aux modules de hanche 5.

Dans le mode de réalisation illustré sur cette figure, le dispositif d'attache 16 est un dispositif d'attache dit « à baïonnette », similaire au dispositif d'attache 8 du module de hanche 5 au module de base 1 illustré sur les figures 9, 10A et 10B.

Le dispositif d'attache 16 est propre à passer d'une configuration déverrouillée dans laquelle le module de sac à dos 14 est détaché du module de hanche 5, à une configuration verrouillée dans laquelle le module de sac à dos 14 est attaché au module de hanche 5.

Le dispositif d'attache 16 comprend une première pièce 161 montée fixe sur le module de hanche 5, et une deuxième pièce 162 montée mobile en rotation et en translation sur le module de support de sac à dos 14.

Plus précisément, la première pièce 161 est fixée au stator 522 de l'actionneur 521 de l'articulation de hanche 52. La deuxième pièce 102 est montée rotative sur l'arceau 141 par le biais de la rotule 145. La deuxième pièce 162 est également montée coulissante par rapport à la rotule 145 selon l'axe X.

La deuxième pièce 162 est propre à être encliquetée dans la première pièce 161, afin de permettre d'attacher le module de support de sac à dos 14 au module de hanche 5 de manière réversible et par conséquent au module de base 1.

La première pièce 161 et la deuxième pièce 162 sont identiques à la première pièce 81 et à la deuxième pièce 82 du dispositif d'attache 8 du module de hanche 5 au module de base 1. Le dispositif d'attache 16 comprend également un élément élastique de rappel 163, sous la forme d'un ressort, propre à solliciter la deuxième pièce 162 dans une direction, opposée à la direction d'insertion de la deuxième pièce 162 dans la première pièce 161.

De cette manière, l'arceau 141 est arrimé à chacune de ses extrémités 143 aux articulations de hanche 52 des modules de hanche 4. Le poids du sac à dos 17 est ainsi transféré au sol par le biais des modules inférieurs, à savoir les modules de hanche 5, les modules de genou 6 et les modules de pied 7.

## Revendications

1. Module d'épaule (3) pour une structure d'exosquelette, le module d'épaule (3) étant destiné à relier un module de coude (4) fixé sur un bras d'un utilisateur à un module de dos (2) fixé sur le dos de l'utilisateur, le module d'épaule (3) comprenant :
- une pluralité de pièces de liaison (34, 36, 38, 310), et
- un premier pivot (35) reliant deux des pièces de liaison (34, 36) en autorisant une rotation de l'une des pièces de liaison (36) par rapport à l'autre pièce de liaison (34) selon un premier axe de rotation (X₁), lors d'une rotation du module de coude (4) par rapport au module de dos (2) correspondant à un mouvement d'abduction ou d'adduction de l'épaule de l'utilisateur,
dans lequel les pièces de liaison (34, 36, 38, 310) incluent une première pièce de liaison (38) comprenant deux pièces (381, 382) montées coulissantes l'une par rapport à l'autre par le biais d'une première glissière (383), **caractérisé en ce que**
le coulissement des pièces (381, 382) l'une par rapport à l'autre autorise un raccourcissement de la première pièce de liaison (38) lors de la rotation du module de coude (4) par rapport au module de dos (2) causée par un mouvement d'abduction de l'épaule de l'utilisateur et autorise un allongement de la première pièce de liaison (38) lors de la rotation du module de coude (4) par rapport au module de dos (2) causée par un mouvement d'adduction de l'épaule de l'utilisateur, et
**caractérisé en ce que** la première glissière (383) comprend un élément élastique de rappel (384) tendant à s'opposer à un écartement des pièces (381, 382) l'une par rapport à l'autre conduisant à un allongement de la première pièce de liaison (38).

2. Module selon la revendication 1, comprenant en outre un deuxième pivot (37) reliant deux pièces de liaison (36, 38) en autorisant une rotation de l'une des pièces de liaison (38) par rapport à l'autre pièce de liaison (36) selon un deuxième axe de rotation (X₂), lors d'un mouvement de rotation du module de coude (4) par rapport au module de dos (2) correspondant à une rotation interne ou externe de l'épaule de l'utilisateur.

3. Module selon la revendication 2, dans lequel le premier axe de rotation (X₁) coupe le deuxième axe de rotation (X₂).

4. Module selon l'une des revendications 1 à 3, comprenant en outre un troisième pivot (39) reliant deux pièces de liaison (38, 310) en autorisant une rotation de l'une des pièces de liaison (310) par rapport à l'autre pièce de liaison (38) selon un troisième axe de rotation (X₃), lors d'une rotation du module de coude (4) par rapport au module de dos (2) correspondant à un mouvement de flexion ou d'extension de l'épaule de l'utilisateur.

5. Module selon la revendication 4, dans lequel le troisième axe de rotation (X₃) coupe le deuxième axe de rotation (X₂).

6. Module selon l'une des revendications 4 et 5, dans lequel les pièces de liaison (34, 36, 38, 310) incluent une deuxième pièce de liaison (310) propre à raccorder le module d'épaule (3) à une articulation de coude (42) du module de coude (4), la deuxième pièce de liaison (310) comprenant deux pièces (3101, 3102) montées coulissantes l'une par rapport à l'autre par le biais d'une deuxième glissière (3103), le coulissement des pièces (3101, 3102) l'une par rapport à l'autre autorisant un raccourcissement ou un allongement de la deuxième pièce de liaison (310) lors d'une rotation du module de coude (4) par rapport au module de dos (2) correspondant à un mouvement de flexion ou d'extension du coude de l'utilisateur.

7. Module selon la revendication 6, dans lequel la deuxième glissière (3103) comprend un élément élastique de rappel (3104) tendant à s'opposer à un écartement des pièces (3101, 3102) l'une par rapport à l'autre conduisant à un allongement de la deuxième pièce de liaison (310).

8. Module selon l'une des revendications 1 à 7, comprenant en outre un mécanisme à quatre barres (32) reliant le module de dos (2) au premier pivot (35), le mécanisme à quatre barres (32) comprenant quatre barres (321-324), et quatre articulations (325-328) reliant les barres (321-324) entre elles en formant un parallélogramme déformable.

9. Module selon la revendication 8, dans lequel le mécanisme à quatre barres (32) comprend un organe élastique (329) s'étendant selon une diagonale du parallélogramme et reliant deux articulations (325, 327) opposées entre elles.

10. Module selon l'une des revendications 8 et 9, comprenant un quatrième pivot (31) reliant l'une des barres (321) du mécanisme à quatre barres (32) à une pièce (221) du module de dos (2) et un cinquième pivot (33) reliant une barre (323) parallèle du mécanisme à quatre barres (32) à l'une des pièces de liaison (34).

11. Structure d'exosquelette comprenant :
- un module de dos (2) propre à être fixé sur le dos d'un utilisateur,
- un module de coude (4) propre à être fixé sur le bras d'un utilisateur, et
- un module d'épaule conforme à l'une des revendications 1 à 10.

## Patentansprüche

1. Schultermodul (3) für eine Exoskelettstruktur, wobei das Schultermodul (3) dafür bestimmt ist, ein Ellbogenmodul (4), das an einem Arm eines Benutzers befestigt ist, mit einem Rückenmodul (2), das an dem Rücken des Benutzers befestigt ist, zu verbinden, wobei das Schultermodul (3) umfasst:
- eine Vielzahl von Verbindungsteilen (34, 36, 38, 310), und
- einen ersten Drehpunkt (35), der zwei der Verbindungsteile (34, 36) verbindet und dabei eine Drehung von einem der Verbindungsteile (36) in Bezug auf das andere Verbindungsteil (34) um eine erste Drehachse (X₁) gestattet, bei einer Drehung des Ellbogenmoduls (4) in Bezug auf das Rückenmodul (2), die einer Abduktions-oder Adduktionsbewegung der Schulter des Benutzers entspricht,
wobei die Verbindungsteile (34, 36, 38, 310) ein erstes Verbindungsteil (38) umfassen, das zwei Teile (381, 382) aufweist, die in Bezug aufeinander mittels einer ersten Gleitführung (383) gleitend montiert sind,
**dadurch gekennzeichnet, dass**
das Gleiten der Teile (381, 382) in Bezug aufeinander eine Verkürzung des ersten Verbindungsteils (38) bei der Drehung des Ellbogenmoduls (4) in Bezug auf das Rückenmodul (2) gestattet, die durch eine Abduktionsbewegung der Schulter des Benutzers verursacht wird, und eine Verlängerung des ersten Verbindungsteils (38) bei der Drehung des Ellbogenmoduls (4) in Bezug auf das Rückenmodul (2) gestattet, die durch eine Adduktionsbewegung der Schulter des Benutzers verursacht wird, und
**dadurch gekennzeichnet, dass**
die erste Gleitführung (383) ein elastisches Rückstellelement (384) umfasst, das dazu neigt, einer Trennung der Teile (381, 382) in Bezug aufeinander entgegenzuwirken, was zu einer Verlängerung des ersten Verbindungsteils (38) führt.

2. Modul nach Anspruch 1, das ferner einen zweiten Drehpunkt (37) umfasst, der zwei Verbindungsteile (36, 38) verbindet und dabei eine Drehung von einem der Verbindungsteile (38) in Bezug auf das andere Verbindungsteil (36) um eine zweite Drehachse (X₂) gestattet, bei einer Drehbewegung des Ellbogenmoduls (4) in Bezug auf das Rückenmodul (2), die einer Innen- oder Außendrehung der Schulter des Benutzers entspricht.

3. Modul nach Anspruch 2, wobei die erste Drehachse (X₁) die zweite Drehachse (X₂) schneidet.

4. Modul nach einem der Ansprüche 1 bis 3, das ferner einen dritten Drehpunkt (39) umfasst, der zwei Verbindungsteile (38, 310) verbindet und dabei eine Drehung von einem der Verbindungsteile (310) in Bezug auf das andere Verbindungsteil (38) um eine dritte Drehachse (X₃) gestattet, bei einer Drehung des Ellbogenmoduls (4) in Bezug auf das Rückenmodul (2), die einer Biege- oder Verlängerungsbewegung der Schulter des Benutzers entspricht.

5. Modul nach Anspruch 4, wobei die dritte Drehachse (X₃) die zweite Drehachse schneidet (X₂) .

6. Modul nach einem der Ansprüche 4 und 5, wobei die Verbindungsteile (34, 36, 38, 310) ein zweites Verbindungsteil (310) umfassen, das das Schultermodul (3) mit einem Ellbogengelenk (42) des Ellbogenmoduls (4) verbinden kann, wobei das zweite Verbindungsteil (310) zwei Teile (3101, 3102) aufweist, die in Bezug aufeinander mittels einer zweiten Gleitführung (3103) gleitend montiert sind, wobei das Gleiten der Teile (3101, 3102) in Bezug aufeinander eine Verkürzung oder Verlängerung des zweiten Verbindungsteils (310) bei der Drehung des Ellbogenmoduls (4) in Bezug auf das Rückenmodul (2) gestattet, was einer Biege- oder Verlängerungsbewegung des Ellbogens des Benutzers entspricht.

7. Modul nach Anspruch 6, wobei die zweite Gleitführung (3103) ein elastisches Rückstellelement (3104) umfasst, das dazu neigt, einer Trennung der Teile (3101, 3102) in Bezug aufeinander entgegenzuwirken, was zu einer Verlängerung des zweiten Verbindungsteils (310) führt.

8. Modul nach einem der Ansprüche 1 bis 7, das ferner einen vierstängigen Mechanismus (32) umfasst, der das Rückenmodul (2) mit dem ersten Drehpunkt (35) verbindet, wobei der vierstängige Mechanismus (32) vier Stangen (321-324) und vier Gelenke (325-328) umfasst, die die Stangen (321-324) miteinander verbinden und dabei ein verformbares Parallelogramm bilden.

9. Modul nach Anspruch 8, wobei der vierstängige Mechanismus (32) ein elastisches Element (329) umfasst, das sich entlang einer Diagonale des Parallelogramms erstreckt und zwei gegenüberliegende Gelenke (325, 327) miteinander verbindet.

10. Modul nach einem der Ansprüche 8 und 9, das einen vierten Drehpunkt (31) umfasst, der eine der Stangen (321) des vierstängigen Mechanismus (32) mit einem Teil (221) des Rückenmoduls (2) verbindet, und einem fünften Drehpunkt (33) umfasst, der eine parallele Stange (323) des vierstängigen Mechanismus (32) mit einem der Verbindungsteile (34) verbindet.

11. Exoskelettstruktur umfassend:
- ein Rückenmodul (2), das an dem Rücken eines Benutzers befestigt werden kann,
- ein Ellbogenmodul (4), das an dem Arm eines Benutzers befestigt werden kann, und
- ein Schultermodul nach einem der Ansprüche 1 bis 10.

## Claims

1. A shoulder module (3) for an exoskeleton structure, the shoulder module (3) being designed to connect an elbow module (4) attached to an arm of a user to a back module (2) attached to the back of the user, the shoulder module (3) comprising:
- a plurality of connecting parts (34, 36, 38, 310), and
- a first pivot (35) connecting two of the connecting parts (34, 36) while allowing rotation of one of the connecting parts (36) with respect to the other connecting part (34) according to a first axis of rotation (X₁), during a rotation of the elbow module (4) with respect to the back module (2), corresponding to an abduction or adduction movement of the shoulder of the user,
wherein the connecting parts (34, 36, 38, 310) include a first connecting part (38) comprising two parts (381, 382) mounted sliding with respect to one another by means of a first slideway (383),
**characterized in that**
the sliding of the parts (381, 382) with respect to one another allows shortening of the first connecting part (38) during rotation of the elbow module (4) with respect to the back module (2) caused by an abduction movement of the shoulder of the user and allows lengthening of the first connecting part (38) during rotation of the elbow module (4) with respect to the back module (2) caused by an adduction movement of the shoulder of the user, and
**characterized in that**
the first slideway (383) comprises an elastic return element (384) tending to oppose a separation of the parts (381, 382) with respect to one another leading to a lengthening of the first connecting part (38).

2. The module according to claim 1, further comprising a second pivot (37) connecting two connecting parts (36, 38) while allowing rotation of one of the connecting parts (38) with respect to the other connecting part (36) according to a second axis of rotation (X₂), during a rotation movement of the elbow module (4) with respect to the back module (2) corresponding to an internal or external rotation of the shoulder of the user.

3. The module according to claim 2, wherein the first axis of rotation (X₁) intersects the second axis of rotation (X₂) .

4. The module according to one of claims 1 to 3, further comprising a third pivot (39) connecting two connecting parts (38, 310) while allowing rotation of one of the connecting parts (310) with respect to the other connecting part (38) according to a third axis of rotation (X₃), during a rotation of the elbow module (4) with respect to the back module (2) corresponding to a flexure or extension movement of the shoulder of the user.

5. The module according to claim 4, wherein the third axis of rotation (X₃) intersects the second axis of rotation (X₂) .

6. The module according to one of claims 4 and 5, wherein the connecting parts (34, 36, 38, 310) include a second connecting part (310) capable of connecting the shoulder module (3) to an elbow joint (42) of the elbow module (4), the second connecting part (310) comprising two parts (3101, 3102) mounted sliding with respect to one another by means of a second slideway (3103), the sliding of the parts (3101, 3102) with respect to one another allowing shortening or lengthening of the second connecting part (310) during rotation of the elbow module (4) with respect to the back module (2) corresponding to a flexure or extension movement of the elbow of the user.

7. The module according to claim 6, wherein the second slideway (3103) comprises an elastic return element (3104) tending to oppose a separation of the parts (3101, 3102) with respect to one another leading to a lengthening of the second connecting part (310).

8. The module according to one of claims 1 to 7, further comprising a four-bar mechanism (32) connecting the back module (2) to the first pivot (35), the four-bar mechanism (32) comprising four bars (321-324), and four joints (325-328) connecting the bars (321-324) to each other while forming a deformable parallelogram.

9. The module according to claim 8, wherein the four-bar mechanism (32) comprises an elastic member (329) extending along a diagonal of the parallelogram and connecting two opposite joints (325, 327) together.

10. The module according to one of claims 8 and 9, comprising a fourth pivot (31) connecting one of the bars (321) of the four-bar mechanism (32) to a part (221) of the back module (2) and a fifth pivot (33) connecting a parallel bar (323) of the four-bar mechanism (32) to one of the connecting parts (34).

11. An exoskeleton structure comprising:
- a back module (2) capable of being attached to the back of a user,
- an elbow module (4) capable of being attached to the arm of a user, and
- a shoulder module conforming to one of claims 1 to 10.
